# EUROPEAN PATENT SPECIFICATION

(11) **EP 3 192 299 B1**
(45) Date of publication and mention of the grant of the patent: **15.01.2020**
(21) Application number: 14901461.5
(22) Date of filing: 10.09.2014
(51) Int. Cl.: H04W 28/02, H04W 28/12, H04L 12/801, H04L 12/833, H04L 12/64, H04L 12/835

(54) **EXPLICIT CONGESTION NOTIFICATION MARKING OF USER TRAFFIC**
EXPLIZITE ÜBERLASTUNGSBENACHRICHTIGUNGSMARKIERUNG VON BENUTZERVERKEHR
MARQUAGE DE NOTIFICATION EXPLICITE DE CONGESTION DE TRAFIC UTILISATEURS

(43) Date of publication of application: 19.07.2017
(73) Proprietor: Telefonaktiebolaget LM Ericsson (publ), 164 83 Stockholm (SE)
(72) Inventor: JOHANSSON, Ingemar, S-976 32 Luleå (SE); SHAH, Samir, Ottawa, Ontario K1Z IEI (CA); WITTBERG, Mikael, S-753 19 Uppsala (SE); BERGQUIST, Gunnar, S-164 45 Kista (SE)
(74) Representative: Zacco Sweden AB
(86) International application number: PCT/SE2014/051041
(87) International publication number: WO 2016/039673

(56) References cited:
- WO-A1-2010/056158
- WO-A1-2013/151468
- WO-A1-2014/066189
- US-A1- 2007 058 532
- US-A1- 2011 158 096
- US-A1- 2012 147 750
- US-A1- 2014 164 641
- RAMAKRISHNAN TERAOPTIC NETWORKS S FLOYD ACIRI D BLACK EMC K: "The Addition of Explicit Congestion Notification (ECN) to IP; rfc3168.txt", NETWORK WORKING GROUP RFC 1717, INTERNET SOCIETY (ISOC) 4, RUE DES FALAISES CH- 1205 GENEVA, SWITZERLAND, CH, 1 September 2001 (2001-09-01), XP015008949, ISSN: 0000-0003

## Description

### TECHNICAL FIELD

The proposed technology generally relates to congestion control in wireless communication networks, and in particular to Explicit Congestion Notification (ECN) marking of user traffic in wireless communication networks.

### BACKGROUND

The **Transmission Control Protocol** (**TCP**) is one of the core protocols of the Internet protocol (IP) suite, and is so common that the entire suite is often called TCP/IP. TCP provides reliable, ordered and error-checked delivery of a stream of octets (bytes) between e.g. programs running on computers or other user devices connected to a local area network, intranet or the public Internet.

TCP is a complex protocol. However, while significant enhancements have been made and proposed over the years, its most basic operation has not changed significantly since its first specification in 1974. Request For Comments (RFC) 2581, TCP Congestion Control, one of the most important TCP-related RFCs in recent years, describes updated algorithms that avoid undue congestion. In 2001, RFC 3168 [Ref. 2] was written to describe Explicit Congestion Notification (ECN), a congestion avoidance signaling mechanism.

The original TCP congestion avoidance algorithm was known as "TCP Tahoe", but many alternative algorithms have since been proposed (including TCP Reno, TCP Vegas, FAST TCP, TCP New Reno, and TCP Hybla).

TCP's congestion control and avoidance algorithms are based on the notion that the network is a black-box. The network's state of congestion or otherwise is determined by end-systems probing for the network state, by gradually increasing the load on the network (by increasing the window of packets that are outstanding in the network) until the network becomes congested and a packet is lost. Treating the network as a black-box and treating loss as an indication of congestion in the network is appropriate for pure best-effort data carried by TCP, with little or no sensitivity to delay or loss of individual packets. However, these mechanisms are not intended to help applications that are in fact sensitive to the delay or loss of one or more individual packets. Interactive traffic such as telnet, web-browsing, and transfer of audio and video data can be sensitive to packet losses or to the increased latency of the packet caused by the need to retransmit the packet after a loss (with the reliable data delivery semantics provided by TCP).

Since TCP determines the appropriate congestion window to use by gradually increasing the window size until it experiences a dropped packet, this causes the queues at the bottleneck router to build up. With most packet drop policies at the router that are not sensitive to the load placed by each individual flow (e.g., tail-drop on queue overflow), this means that some of the packets of latency-sensitive flows may be dropped. In addition, such drop policies lead to synchronization of loss across multiple flows.

Active queue management (AQM) mechanisms detect congestion before the queue overflows, and provide an indication of this congestion to the end nodes. Thus, AQM can reduce unnecessary queuing delay for all traffic sharing that queue. AQM avoids some of the bad properties of dropping on queue overflow, including the undesirable synchronization of loss across multiple flows. More importantly, AQM means that transport protocols with mechanisms for congestion control (e.g. TCP) do not have to rely on buffer overflow as the only indication of congestion.

AQM mechanisms may use one of several methods for indicating congestion to end-nodes. One is to use packet drops, as is currently done. However, AQM allows the router to separate policies of queuing or dropping packets from the policies for indicating congestion. Thus, AQM can set a Congestion Experienced (CE) codepoint in the packet header instead of dropping the packet, when such a field is provided in the IP header of the packet and understood by the transport protocol. The use of the CE codepoint with ECN allows the receiver(s) to receive the packet, avoiding the potential for excessive delays due to retransmissions after packet losses. This procedure has the potential of reducing the impact of loss on latency-sensitive flows.

The procedure uses an ECN field in the IP header with two bits, making four ECN codepoints, 'OO' to '11 '. The ECN-Capable Transport (ECT) codepoints 'I O' and '01 ' are set by the data sender to indicate that the end-points of the transport protocol are ECN-capable; we call them ECT(O) and ECT(1) respectively. Routers treat the ECT(O) and ECT(1) codepoints as equivalent. Senders are free to use either the ECT(O) or the ECT(1) codepoint to indicate ECT, on a packet-by-packet basis.

The not-ECT codepoint '00' indicates a packet that is not using ECN. The CE codepoint'1 1 ' is set by a router to indicate congestion to the end nodes. Routers that have a packet arriving at a full queue drop the packet, just as they do in the absence of ECN.

ECN in Long-Term Evolution (LTE) networks is specified in 3^{rd} Generation Partnership Project (3GPP) Technical Specification (TS) 36.300 [Ref. 1]. The specification is however not detailed and does for instance not indicate how the ECN marking decision is applied to the IP packets. This has natural causes as the ECN marking functionality can be located on different places in the protocol stack depending on vendor preferences. However, there are some issues with the current solutions for ECN marking, such as delayed congestion indications and possibly increased signalling load in base stations, making it difficult to support new ECN based congestion control algorithms. A more efficient procedure for ECN marking is therefore needed.

### SUMMARY

It is an object to provide methods and radio network nodes for ECN marking of user traffic in a wireless communication network. The invention is defined by the independent claims. Furthermore, embodiments of the invention are defined by the claims. The below mentioned embodiments represent examples, at least in part encompassed by the claims.

An aspect of the embodiments relates to a method performed by a sending radio network node for supporting ECN marking of user traffic in a wireless communication network. The method comprises the step of monitoring a congestion metric on a data radio bearer, and the step of transmitting control information indicating traffic congestion on the same data radio bearer, based on the monitored congestion metric, to a receiving radio network node.

Another aspect of the embodiments relates to a method performed by a receiving radio network node for ECN marking of user traffic in a wireless communication network. The method comprises the step of receiving control information indicating traffic congestion on a data radio bearer, based on a congestion metric, from a sending radio network node. The method further comprises the step of marking next ECN-capable user packet of the user traffic on the same data radio bearer with ECN marking, based on the received control information.

Yet another aspect of the embodiments relates to a sending radio network node configured to support ECN marking of user traffic in a wireless communication network. The sending radio network node is configured to monitor a congestion metric on a data radio bearer, and to transmit control information indicating traffic congestion on the same data radio bearer, based on the monitored congestion metric, to a receiving radio network node.

Yet another aspect of the embodiments relates to a receiving radio network node configured to mark user traffic in a wireless communication network with ECN marking. The receiving radio network node is configured to receive control information indicating traffic congestion on a data radio bearer, based on a congestion metric, from a sending radio network node, and to mark next ECN-capable user packet of the user traffic on the same data radio bearer with ECN marking, based on the received control information.

Some advantages of the proposed technology are that more timely congestion signals to the endpoints are enabled, and also that it will be possible to support new ECN based congestion control algorithms.

Other advantages will be appreciated when reading the detailed description.

### BRIEF DESCRIPTION OF THE DRAWINGS

The embodiments, together with further objects and advantages thereof, may best be understood by making reference to the following description taken together with the accompanying drawings, in which:
Fig. 1 is a schematic flow diagram illustrating an example of a method performed by a sending radio network node for supporting ECN marking of user traffic in a wireless communication network according to an embodiment.
Fig. 2 is a schematic flow diagram illustrating an example of a method performed by a receiving radio network node for ECN marking of user traffic in a wireless communication network according to an embodiment.
Fig. 3 is a schematic diagram illustrating an example of a sending radio network node configured to support ECN marking of user traffic in a wireless communication network according to an embodiment.
Fig. 4 is a schematic diagram illustrating an example of a receiving radio network node configured to mark user traffic in a wireless communication network with ECN marking according to an embodiment.
Fig. 5 is a schematic block diagram illustrating an example of a sending radio network node configured to support ECN marking of user traffic in a wireless communication network.
Fig. 6 is a schematic block diagram illustrating an example of a receiving radio network node configured to mark user traffic in a wireless communication network with ECN marking.
Fig. 7 is an illustration of an example of a MAC sub-header according to prior art.
Fig. 8 is an illustration of an example of an ECN RLC Control PDU according to an embodiment.
Fig. 9 is a schematic diagram illustrating an example of an implementation in an LTE protocol stack in a sending radio network node according to an embodiment.
Fig. 10 is a schematic diagram illustrating an example of an implementation in an LTE protocol stack in a receiving radio network node according to an embodiment.
Fig. 11 is an illustration of an example of an ECN MAC Control Element according to an embodiment.
Fig. 12 is an example simulation illustrating a possible improvement in congestion control using the proposed embodiments.
Fig. 13 is another example simulation illustrating a possible improvement in congestion control using the proposed embodiments.

### DETAILED DESCRIPTION

Throughout the drawings, the same reference numbers are used for similar or corresponding elements.

When using the word "comprise" or "comprising" it shall be interpreted as non-limiting, i.e. meaning "consist at least of".

As mentioned in the background above, ECN in LTE is specified in 3GPP TS 36.300 [Ref. 1]. The specification is however not detailed and does for instance not indicate how the ECN marking decision is applied to the IP packets. This has natural causes as the ECN marking functionality can be located on different places in the protocol stack depending on vendor preferences.

In cases where the IP packets are queued up as Radio Link Control (RLC) Service Data Units (SDUs) and the ECN marking decision is done below the Packet Data Convergence Protocol (PDCP) layer processing it becomes difficult to apply ECN marking on the IP packets as these are ciphered by the PDCP processing. The solution to this is to indicate to the PDCP layer that the next incoming IP packet should be ECN-CE marked.

The problem with such a solution is that packets are potentially ECN-CE marked in the tail of the packet stream and this can delay the congestion indications to the endpoints. Another potential issue is that the indication from the RLC layer processing to the PDCP layer processing can give an increased signalling load in the computer hardware, which may impose a restriction on how often ECN marking can be applied, making novel TCP versions like Data Center TCP (DCTCP) [Ref. 3] difficult to support.

The patent application US 2012/0147750 A1 describes a method for a mobile station to signal a request for a reduction in data transmission rate to a base station by monitoring resource use associated with the mobile station, and then use the ECN mechanism to trigger a reduction in transmission rate if actual or impending overloading of one or more of these resources is detected.

WO2010/056158 A1 describes a first communication device arranged to notify congestion indications to a second communication device. The first communication device comprises a control unit arranged to determine to apply an indicating congestion mechanism on a first radio bearer to the second communication device based on a quality of service setting of the first radio bearer.

US 2007/0058532 A1 describes a method comprising measuring traffic congestion experienced by a message transmitted from a source device, and if the measured traffic congestion exceeds a threshold limit, altering at least one bit within a Layer 2 (L2) header of the message. This bit alteration is subsequently used to determine when to notify a source of the message that the message experienced traffic congestion.

The concept of the currently proposed invention is to signal congestion to a receiver by transmitting control information indicating that traffic congestion has occurred. The receiver will then convert that control information into ECN marking of the user traffic. ECN marking is thus done in a head of queue manner, avoiding the issues described above.

Two examples of implementation, one that is based on Radio Link Control (RLC) layer control and one that is based on Medium Access Control (MAC) layer control, will be described in detail below. There may of course also be other alternatives for implementing the proposed embodiments. The conceptual benefits with forward ECN marking will be described, compared to the alternatives possible with state of the art technology.

The proposed embodiments are mainly described in the context of an LTE network, but may also be applied to other types of wireless communication networks.

For a better understanding of the proposed technology, it may be useful to begin with a brief overview of some background technology, described with reference to some non-limiting examples.

### RLC layer control

An RLC Control Protocol Data Unit (PDU) header always begins with half a byte of data, consisting of one bit Data/Control (D/C) set to 0 and a three-bit Control PDU Type (CPT) field. The CPT defines the type of Control PDU.

Table 1 shows values used by 3GPP LTE. LCID=Logical Channel ID.

**Table 1. RLC Control PDU Types**

| **Index** | **LCID values** | **size** |
|---|---|---|
| 000 | STATUS PDU | variable |
| 001-111 | Reserved for future needs | N/A |

### MAC layer control

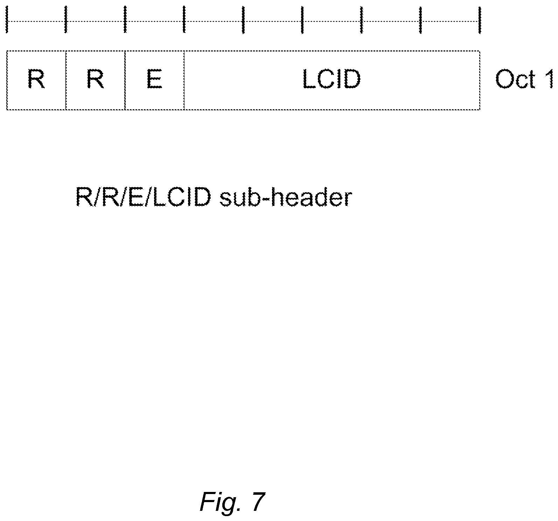

A MAC PDU sub-header for fixed sized MAC Control Elements (CE) consists of the four header fields R/R/E/LCID, as shown in Fig. 7. R=Reserved bits, E=Extension bits, LCID=Logical Channel ID. The LCID defines the type of CE.

Table 2 and Table 3 show values used for 3GPP LTE for Downlink Shared Channel (DL-SCH) and Uplink Shared Channel (UL-SCH). UE=User Equipment, DRX=Discontinuous Reception, C-RNTI=Cell Radio Network Temporary Identifier, BSR=Buffer Status Report.

**Table 2. MAC Control Elements for DL-SCH**

| **Index** | **LCID values** | **Size** |
|---|---|---|
| 01011-11010 | Reserved for future needs | N/A |
| 11011 | Activation/Deactivation | 1 |
| 11100 | UE Contention Resolution Identity | 6 |
| 11101 | Timing Advance Command | 1 |
| 11110 | DRX Command | 0 |

**Table 3. MAC Control Elements for UL-SCH**

| **Index** | **LCID values** | **size** |
|---|---|---|
| 01011-11000 | Reserved for future needs | N/A |
| 11001 | Extended Power Headroom Report | variable |
| 11010 | Power Headroom Report | 1 |
| 11011 | C-RNTI | 2 |
| 11100 | Truncated BSR | 1 |
| 11101 | Short BSR | 1 |
| 11110 | Long BSR | 3 |

The MAC Control Element itself is coded in the payload part of the MAC PDU. Different sizes are used depending on the details of the particular control. In the simplest case, size is 0 and the function is already fully determined by the sub-header. The size of a MAC CE can also be variable.

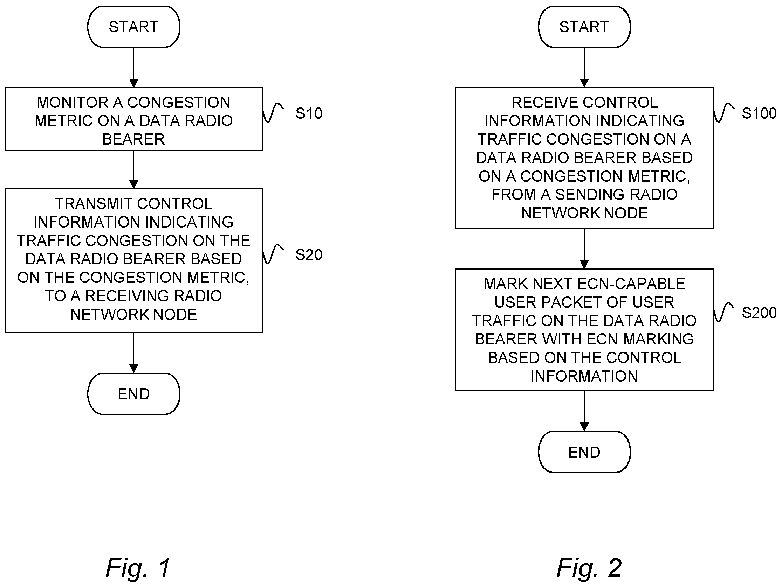

Fig. 1 is a schematic flow diagram illustrating an example of a method performed by a sending radio network node for supporting ECN marking of user traffic in a wireless communication network. The method comprises the step S10 of monitoring a congestion metric on a data radio bearer. The method further comprises the step S20 of transmitting control information indicating traffic congestion on the same data radio bearer, based on the monitored congestion metric, to a receiving radio network node.

A congestion metric is a measure of the level of congestion on a data radio bearer. The congestion metric may for example be a measure of queue size or queue delay. In an example embodiment the congestion metric is an RLC buffer level. The term buffer level is generic and may represent e.g. the number of bytes or SDUs in the RLC buffer. In a particular embodiment the congestion metric is a user packet queuing delay, and may in an example embodiment be the time elapsed since the head SDU was inserted into the queue.

As an example, traffic congestion may be considered to have occurred when the congestion metric exceeds a certain threshold. Thus, in one embodiment, control information indicating traffic congestion is transmitted based on the congestion metric exceeding a given threshold.

The control information indicating traffic congestion may for example be transmitted to the receiver by adding dedicated elements into existing messages that carry the ECN marking to the receiver. According to an embodiment, which is based on RLC layer control, the control information is transmitted in an RLC Control Protocol Data Unit (PDU). According to an alternative embodiment, which is based on Medium Access Control (MAC) layer control, the control information is transmitted in a MAC control message, such as for example a MAC Control Element, or a particular Logical Channel ID (LCID) in the MAC sub-header, or similar. There may of course also be other alternatives for transmitting control information indicating traffic congestion.

Fig. 2 is a schematic flow diagram illustrating an example of a method performed by a receiving radio network node for ECN marking of user traffic in a wireless communication network. The method comprises the step S100 of receiving control information indicating traffic congestion on a data radio bearer, based on a congestion metric, from a sending radio network node. The method further comprises the step S200 of marking next ECN-capable user packet of the user traffic on the same data radio bearer with ECN marking, based on the received control information.

An ECN-capable user packet may in one embodiment be an IP packet that is ECN capable (ECT).

As described above, the proposed embodiments may be implemented using RLC layer control, and thus the control information may in one embodiment be received in an RLC Control PDU. Alternatively, the proposed embodiments may be implemented using MAC layer control, and thus the control information may in an alternative embodiment be received in a MAC control message, such as for example a MAC Control Element, or a particular LCID in the MAC sub-header, or similar. There may of course also be other alternatives for receiving control information indicating traffic congestion.

In the following, some non-limiting examples of illustrative embodiments are described.

### RLC layer control

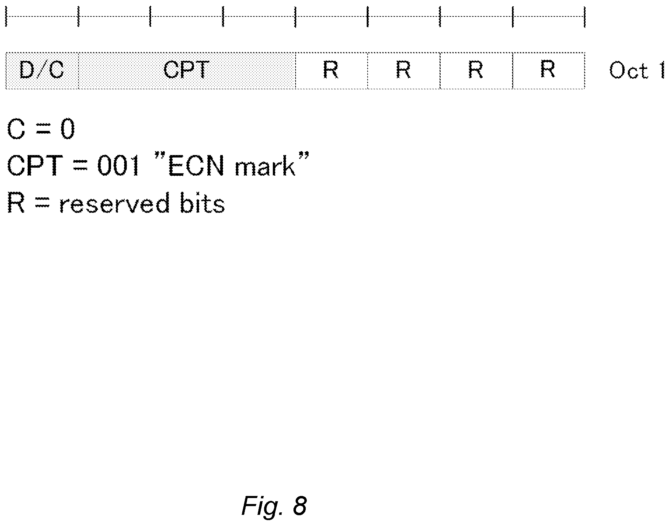

In an example embodiment, an ECN RLC Ctrl PDU is generated whenever an ECN marking decision is made. In a particular embodiment, the size of the ECN Ctrl PDU is 1 byte and its disposition is according to Fig. 8.

The use of the reserved bits is to be decided. In one embodiment they can be used to indicate a queue size or queue delay, quantized to 16 levels.

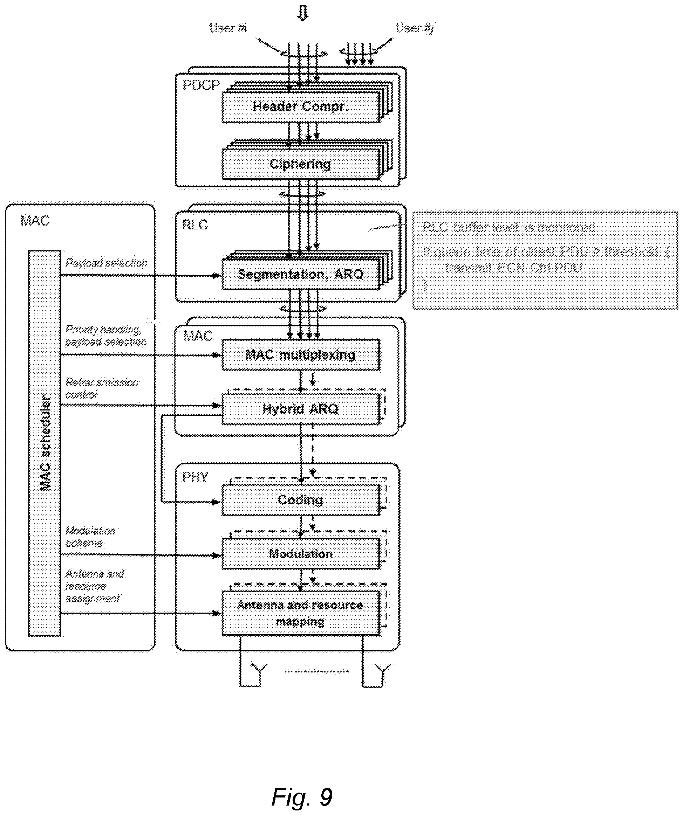

Fig. 9 shows the functionality deployed in the LTE protocol stack in a sending radio network node according to an embodiment.

In this embodiment, the RLC buffer level is monitored in the RLC layer processing. The term buffer level is generic and can for example depict either the number of bytes, SDUs, segments of SDUs, PDUs or portions of PDUs in the RLC buffers. In a preferred embodiment the level is given by the queuing delay i.e. the time elapsed since the head SDU was inserted into the queue.

In this embodiment, an ECN RLC Ctrl PDU is created if the two conditions below are satisfied:
1. An RLC data PDU is transmitted, this also includes retransmission of RLC PDUs, and
2. The RLC buffer level exceeds a given threshold

The created ECN RLC Ctrl PDU is transmitted, preferably with a higher priority than the RLC SDUs.

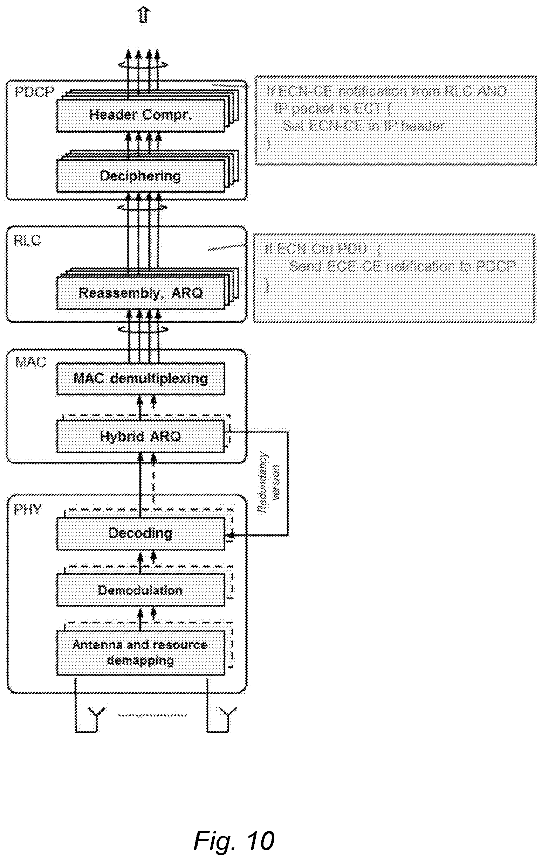

Fig. 10 shows the functionality deployed in the LTE protocol stack in a receiving radio network node according to an embodiment.

In this embodiment, the following steps are taken when an ECN Ctrl PDU is detected at the RLC layer:
1. A notification is sent to the PDCP layer
2. In PDCP layer processing upon de-capsulation of PDCP PDU, the decapsulated IP packet is ECN-CE marked if:
   a. The IP packet is ECN capable (ECT), and
   b. A new ECN notification has been received from the RLC layer processing

Table 4 shows received ECN Ctrl PDUs are translated to ECN marking in IP hiarer in PDCP processing.

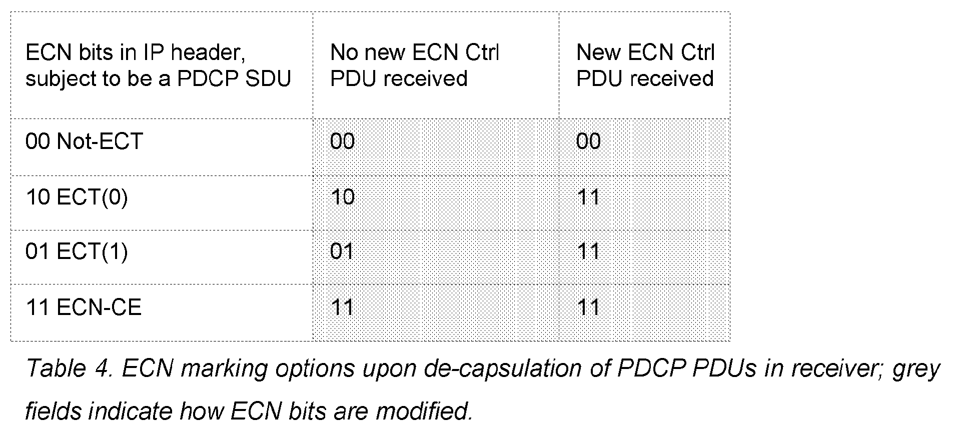

### MAC layer control

The MAC Control Element contains the same elements of information as the RLC Ctrl PDU. Furthermore the processing is similar to above. In a proposed embodiment, a new LCID is needed for the new ECN MAC Control Element sent over the DL-SCH and UL-SCH channels, as exemplified below by updating the table 6.2.1-1 and 6.2.1-2 in the 36.321 MAC spec. For convenience, the same reserved LCID value is shown for both UL and DL control elements. CCCH=Common Control Channel.

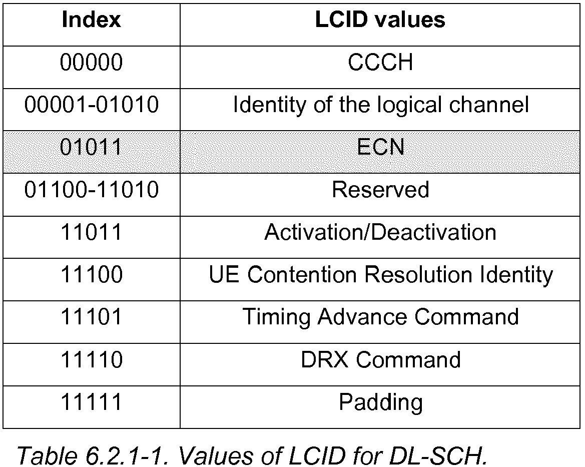

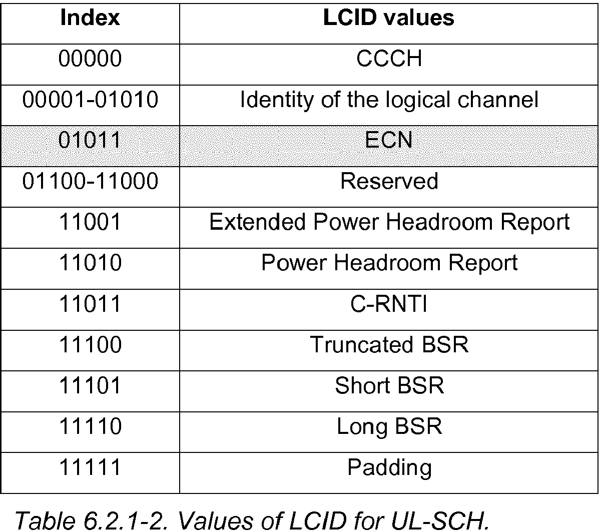

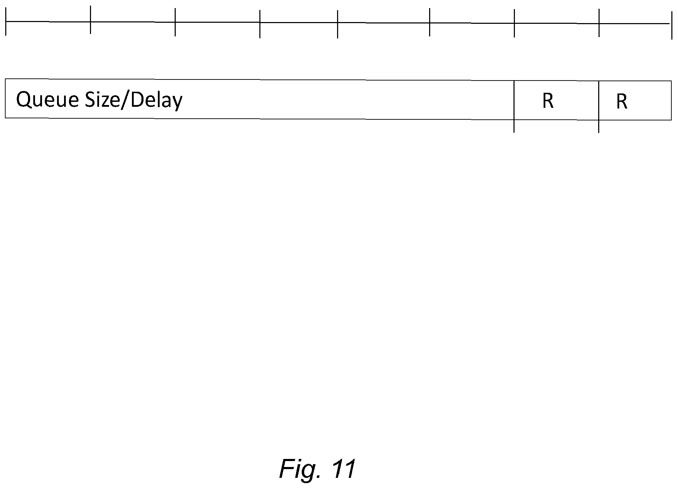

A MAC Control element itself can either be without a body and have zero size, or it can have a body including similar information as for the RLC control PDU. An example of an ECN MAC Control Element is depicted in Fig. 11.

The example in Fig. 11 shows an ECN MAC Control Element which has 6 bits that can be used to indicate a queue size or queue delay, quantized to 64 levels, and 2 spare bits marked with the R character.

In an example of an implementation, at least some of the steps, functions, procedures, modules and/or blocks described herein are implemented in a computer program, which is loaded into the memory for execution by processing circuitry including one or more processors. The processor(s) and memory are interconnected to each other to enable normal software execution. An optional input/output device may also be interconnected to the processor(s) and/or the memory to enable input and/or output of relevant data such as input parameter(s) and/or resulting output parameter(s).

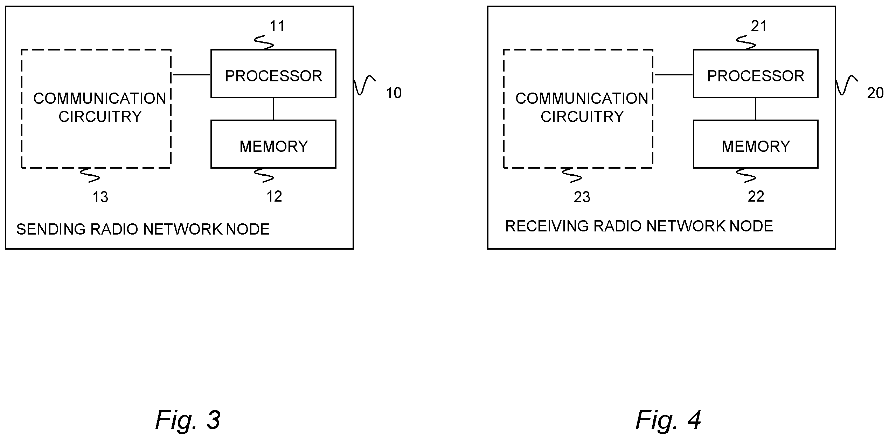

The embodiments herein may thus be implemented through one or more processors, such as a processor in the sending radio network node depicted in Fig. 3, or the processor in the receiving radio network node depicted in Fig. 4, together with computer program code for performing the functions and actions of the embodiments herein.

According to an embodiment, a sending radio network node is configured to support ECN marking of user traffic in a wireless communication network. The sending radio network node is configured to monitor a congestion metric on a data radio bearer, and to transmit control information indicating traffic congestion on the same data radio bearer, based on the monitored congestion metric, to a receiving radio network node.

Here, the congestion metric is an RLC buffer level. Further, the congestion metric can also be a user packet queuing delay.

In one embodiment, the sending radio network node is configured to transmit control information indicating traffic congestion based on the congestion metric exceeding a given threshold.

In one embodiment the sending radio network node is configured to transmit control information indicating traffic congestion in an RLC Control PDU. In an alternative embodiment the sending radio network node is configured to transmit control information indicating traffic congestion in a MAC control message.

Fig. 3 is a schematic diagram illustrating an example of a sending radio network node 10 operative to support ECN marking of user traffic in a wireless communication network according to an embodiment. In this example, the sending radio network node 10 basically comprises a processor 11, an associated memory 12 and optional communication circuitry 13. The optional communication circuitry 13 is adapted for wireless and/or wired communication with one or more other nodes, including transmitting and/or receiving information.

As indicated in the specific example of Fig. 3, the sending radio network node 10 comprises a processor 11 and a memory 12, wherein the memory 12 comprises instructions executable by the processor 11 to perform operations of the sending radio network node 10. Thus, the processor 11 is operative to monitor a congestion metric on a data radio bearer.

As indicated in Fig. 3, the sending radio network node 10 may also include communication circuitry 13 for communication with one or more other nodes, including transmitting and/or receiving information. Thus, in a particular embodiment the sending radio network node 10 comprises communication circuitry 13 configured to transmit control information indicating traffic congestion on the same data radio bearer, based on the monitored congestion metric, to a receiving radio network node.

According to an embodiment, a receiving radio network node is configured to mark user traffic in a wireless communication network with ECN marking. The receiving radio network node is configured to receive control information indicating traffic congestion on a data radio bearer, based on a congestion metric, from a sending radio network node, and to mark next ECN-capable user packet of the user traffic on the same data radio bearer with ECN marking, based on the received control information.

In one embodiment the receiving radio network node is configured to receive control information indicating traffic congestion in an RLC Control PDU. In an alternative embodiment the receiving radio network node is configured to receive control information indicating traffic congestion in a MAC control message.

In one embodiment the ECN-capable user packet is an IP packet that is ECN capable (ECT).

Fig. 4 is a schematic diagram illustrating an example of a receiving radio network node 20 operative to mark user traffic in a wireless communication network with ECN marking according to an embodiment. In this example, the receiving radio network node 20 basically comprises a processor 21, an associated memory 22 and optional communication circuitry 23. The optional communication circuitry 23 is adapted for wireless and/or wired communication with one or more other nodes, including transmitting and/or receiving information.

As indicated in the specific example of Fig. 4, the receiving radio network node may include communication circuitry 23 for communication with one or more other nodes, including transmitting and/or receiving information. Thus, in a particular embodiment the receiving radio network node 20 comprises communication circuitry 23 configured to receive control information indicating traffic congestion on a data radio bearer, based on a congestion metric, from a sending radio network node.

As indicated in Fig. 4, the receiving radio network node 20 comprises a processor 21 and a memory 22, wherein the memory 22 comprises instructions executable by the processor 21 to perform operations of the receiving radio network node 20. Thus, in this example embodiment the processor 21 is operative to mark next ECN-capable user packet of the user traffic on the same data radio bearer with ECN marking, based on the received control information.

In some of the proposed embodiments, the wireless communication network is a Long Term Evolution, LTE, network.

The proposed embodiments may be used for downlink (DL) traffic. In such an implementation, the sending radio network node may be a base station, such as an eNodeB, and the receiving radio network node may be a wireless communication device, such as for example a user equipment (UE).

As an alternative, the proposed embodiments may however also be used for uplink (UL) traffic. In such an implementation, the sending radio network node may be a wireless communication device, such as for example a user equipment (UE), and the receiving radio network node may be a base station, such as an eNodeB.

As described above, at least some of the steps, functions, procedures, modules and/or blocks described above may be implemented in software such as a computer program for execution by suitable processing circuitry including one or more processing units.

A computer program comprises instructions, which when executed by at least one processor, cause the processor(s) to monitor a congestion metric on a data radio bearer, and prepare control information indicating traffic congestion on the same data radio bearer, based on the monitored congestion metric, for transmitting to a receiving radio network node.

A computer program comprises instructions, which when executed by at least one processor, cause the processor(s) to read control information indicating traffic congestion on a data radio bearer, based on a congestion metric, where the control information is received from a sending radio network node, and mark next ECN-capable user packet of the user traffic on the same data radio bearer with ECN marking, based on the received control information.

The proposed technology also provides a carrier comprising one or more of the above computer programs, wherein the carrier is one of an electronic signal, an optical signal, an electromagnetic signal, a magnetic signal, an electric signal, a radio signal, a microwave signal, or a computer-readable storage medium.

By way of example, the software or computer program may be realized as a computer program product, which is normally carried or stored on a computer-readable medium, in particular a non-volatile medium. The computer-readable medium may include one or more removable or non-removable memory devices including, but not limited to a Read-Only Memory (ROM), a Random Access Memory (RAM), a Compact Disc (CD), a Digital Versatile Disc (DVD), a Blueray disc, a Universal Serial Bus (USB) memory, a Hard Disk Drive (HDD) storage device, a flash memory, a magnetic tape, or any other conventional memory device. The computer program may thus be loaded into the operating memory of a computer or equivalent processing device for execution by the processing circuitry thereof.

The flow diagram or diagrams presented above may be regarded as a computer flow diagram or diagrams, when performed by one or more processors. A corresponding radio network node may be defined as a group of function modules, where each step performed by the processor corresponds to a function module. In this case, the function modules are implemented as a computer program running on the processor. Hence, the radio network nodes may alternatively be defined as a group of function modules, where the function modules are implemented as a computer program running on at least one processor.

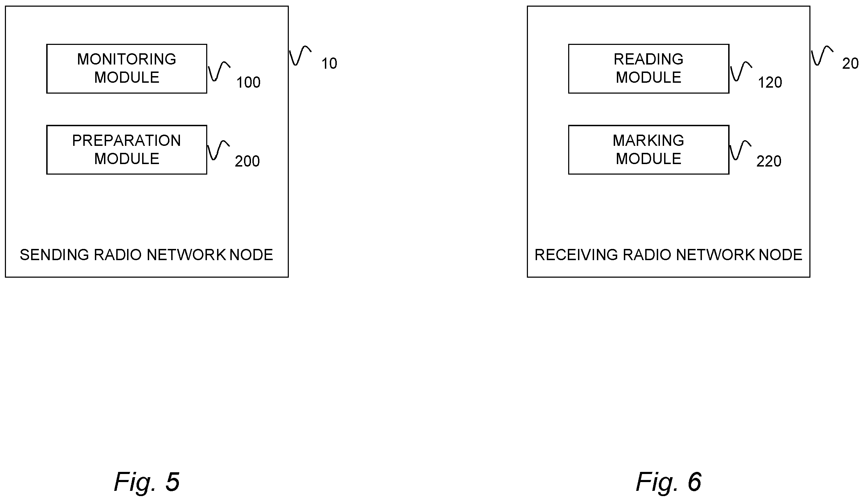

Hence, the computer program residing in memory may be organized as appropriate function modules configured to perform, when executed by the processor, at least part of the steps and/or tasks described herein. An example of such function modules is illustrated in Figs. 5 and 6.

Fig. 5 is a schematic block diagram illustrating an example of a sending radio network node for supporting ECN marking of user traffic in a wireless communication network. The sending radio network node 10 in this example comprises a monitoring module 100 configured to monitor a congestion metric on a data radio bearer. The sending radio network node 10 further comprises a preparation module 200 configured to prepare control information indicating traffic congestion on the same data radio bearer, based on the monitored congestion metric, for transmitting to a receiving radio network node.

Fig. 6 is a schematic block diagram illustrating an example of a receiving radio network node for ECN marking of user traffic in a wireless communication network. The receiving radio network node 20 in this example comprises a reading module 120 configured to read control information indicating traffic congestion on a data radio bearer, based on a congestion metric, where the control information is received from a sending radio network node. The receiving radio network node 20 further comprises a marking module 220 configured to mark next ECN-capable user packet of the user traffic on the same data radio bearer with ECN marking, based on the received control information.

The proposed embodiments enable more timely congestion signals to the endpoints and also makes it possible to support new ECN based congestion control algorithms that deviate from the behaviour depicted in RFC 3168 [Ref. 2].

### Example simulations

A few examples of the possible improvement with head of queue ECN marking is shown below.

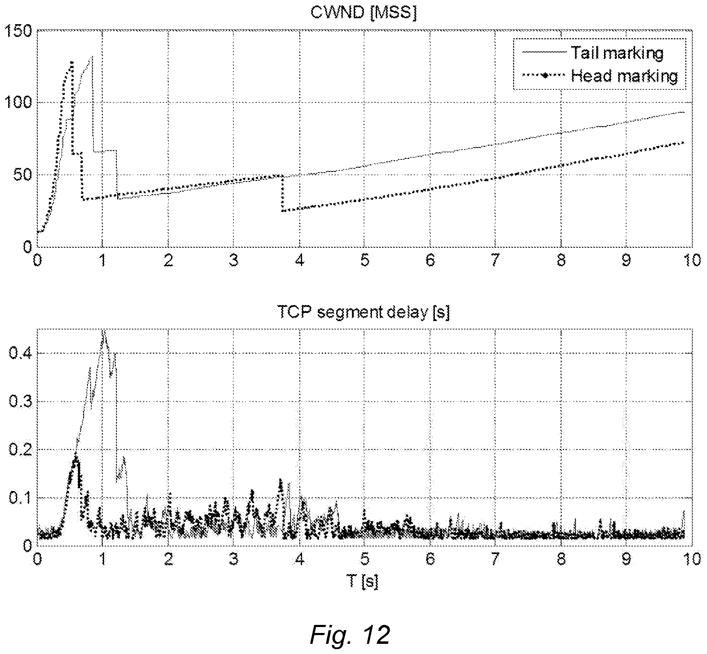

Fig. 12 shows an example trace for a file transfer with TCP Reno where ECN marking is done in the tail of the queue, or in the head of the queue by means of RLC Ctrl PDUs. The upper graph shows Congestion Window Size (CWND) and the lower graph shows TCP segment delay. It is clear from the lower graph that the head marking approach gives a much smaller overshoot during slow start. The head ECN marking gives a peak TCP segment delay of 200ms at T= 0.6 while the tail ECN marking gives a peak TCP segment delay higher than 400ms. Thus the head ECN marking gives a much quicker reaction to congestion.

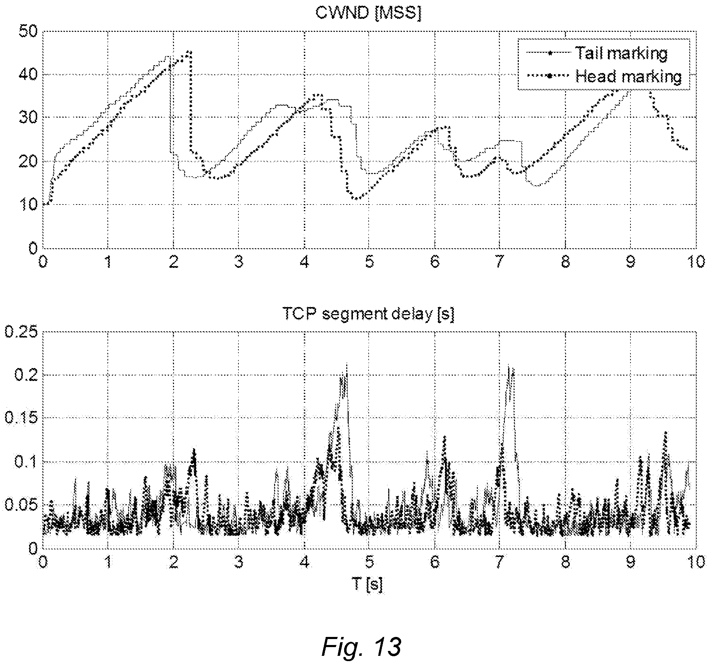

A similar experiment is run with Data Center TCP (DCTCP) [Ref. 3], see Fig. 13. DCTCP is a novel TCP version for Data Centers that base the CWND on the fraction of TCP segments that are ECN-CE marked. The DCTCP implementation in this experiment has a feature that avoids the slow start overshoot. Instead the benefit with head marking is seen around T=4.5s and T=7.0s. Head marking gives a quicker response to the increase in queuing delay and thus a smaller delay peak. For instance at T = 7.0s the head ECN marking gives a peak TCP segment delay of little more than 100ms, while the tail ECN marking gives a peak TCP segment delay higher than 200ms.

The lower peak delays is beneficial not only for the file transfers but also for other latency sensitive cross traffic over the same bearer, examples of which are online gaming traffic and Voice-over-Internet Protocol (VoIP).

As used herein, the non-limiting terms "User Equipment" and "wireless device" may refer to a mobile phone, a cellular phone, a Personal Digital Assistant, PDA, equipped with radio communication capabilities, a smart phone, a laptop or Personal Computer, PC, equipped with an internal or external mobile broadband modem, a tablet PC with radio communication capabilities, a target device, a device to device UE, a machine type UE or UE capable of machine to machine communication, iPAD, customer premises equipment, CPE, laptop embedded equipment, LEE, laptop mounted equipment, LME, USB dongle, a portable electronic radio communication device, a sensor device equipped with radio communication capabilities or the like. In particular, the term "UE" and the term "wireless device" should be interpreted as non-limiting terms comprising any type of wireless device communicating with a radio network node in a cellular or mobile communication system or any device equipped with radio circuitry for wireless communication according to any relevant standard for communication within a cellular or mobile communication system.

As used herein, the non-limiting term "radio network node" may refer to base stations, network control nodes such as network controllers, radio network controllers, base station controllers, and the like, as well as to wireless devices such as exemplified above. In particular, the term "base station" may encompass different types of radio base stations including standardized base stations such as Node Bs, or evolved Node Bs, (eNodeBs), and also macro/micro/pico radio base stations, home base stations, also known as femto base stations, relay nodes, repeaters, radio access points, base transceiver stations, BTSs, and even radio control nodes controlling one or more Remote Radio Units, RRUs, or the like.

It will be appreciated that the methods and devices described herein can be combined and re-arranged in a variety of ways.

For example, embodiments may be implemented in hardware, or in software for execution by suitable processing circuitry, or a combination thereof.

The steps, functions, procedures, modules and/or blocks described herein may be implemented in hardware using any conventional technology, such as discrete circuit or integrated circuit technology, including both general-purpose electronic circuitry and application-specific circuitry.

Particular examples include one or more suitably configured digital signal processors and other known electronic circuits, e.g. discrete logic gates interconnected to perform a specialized function, or Application Specific Integrated Circuits (ASICs).

Examples of processing circuitry includes, but is not limited to, one or more microprocessors, one or more Digital Signal Processors, DSPs, one or more Central Processing Units, CPUs, video acceleration hardware, and/or any suitable programmable logic circuitry such as one or more Field Programmable Gate Arrays, FPGAs, or one or more Programmable Logic Controllers, PLCs.

It should also be understood that it may be possible to re-use the general processing capabilities of any conventional device or unit in which the proposed technology is implemented. It may also be possible to re-use existing software, e.g. by reprogramming of the existing software or by adding new software components. The term 'processor' should be interpreted in a general sense as any system or device capable of executing program code or computer program instructions to perform a particular processing, determining or computing task.

The processing circuitry including one or more processors is thus configured to perform, when executing the computer program, well-defined processing tasks such as those described above.

The processing circuitry does not have to be dedicated to only execute the above-described steps, functions, procedure and/or blocks, but may also execute other tasks.

The embodiments described above are merely given as examples, and it should be understood that the proposed technology is not limited thereto. It will be understood by those skilled in the art that various modifications, combinations and changes may be made to the embodiments without departing from the present scope as defined by the appended claims. In particular, different part solutions in the different embodiments can be combined in other configurations, where technically possible.

### REFERENCES

[1] 3GPP TS 36.300 v12.0.0 section 11.6
[2] RFC 3168 "The Addition of Explicit Congestion Notification (ECN) to IP"
[3] M. Alizadeh et al. "Data Center TCP (DCTCP)", SIGCOMM'10, August 30-September 3, 2010, New Delhi, India

## Claims

1. A method performed by a receiving radio network node (20) for Explicit Congestion Notification, ECN, marking of user traffic in a wireless communication network, wherein said method comprises the steps of:
receiving (S100) control information from a sending radio network node (10); wherein said control information is indicating traffic congestion on a data radio bearer, based on a congestion metric; and
marking (S200) next ECN-capable user packet of said user traffic on said data radio bearer with ECN marking, based on said control information; wherein said user packet is an Internet Protocol, IP, packet; and
wherein said control information is received in a Radio Link Control, RLC, Control Protocol Data Unit, PDU, or a Medium Access Control, MAC, control message.

2. The method according to the claim 1, wherein said wireless communication network is a Long Term Evolution, LTE, network.

3. The method according to any of the claims 1 or 2, wherein said receiving radio network node (20) is a wireless communication device.

4. The method according to any of the claims 1 or 2, wherein said receiving radio network node (20) is an eNodeB.

5. A receiving radio network node (20) configured to mark user traffic in a wireless communication network with Explicit Congestion Notification, ECN, marking, wherein said receiving radio network node (20) is configured to receive control information from a sending radio network node (10); wherein said control information is indicating traffic congestion on a data radio bearer, based on a congestion metric; and
wherein said receiving radio network node (20) is configured to mark next ECN-capable user packet of said user traffic on said data radio bearer with ECN marking, based on said control information; wherein said user packet is an Internet Protocol, IP, packet; and
wherein said control information is received in a Radio Link Control, RLC, Control Protocol Data Unit, PDU, or in a Medium Access Control, MAC, control message.

## Patentansprüche

1. Durch einen empfangenden Funknetzknoten (20) durchgeführtes Verfahren zur expliziten Überlastungsbenachrichtigungsmarkierung, ECN-Markierung, von Benutzerverkehr in einem drahtlosen Kommunikationsnetz, wobei das Verfahren die Schritte umfasst:
Empfangen (S100) von Steuerinformation von einem sendenden Funknetzknoten (10); wobei die Steuerinformation eine Verkehrsüberlastung auf einem Datenfunkträger basierend auf einer Überlastungsmetrik angibt; und
Markieren (S200) des nächsten ECN-fähigen Benutzerpakets des Benutzerverkehrs auf dem Datenfunkträger mit ECN-Markierung basierend auf der Steuerinformation; wobei das Benutzerpaket ein Internetprotokollpaket, IP-Paket, ist; und
wobei die Steuerinformationen in einer Funkverbindungssteuerungs-Steuerungsprotokolldateneinheit, RLC-PDU, oder einer Mediumzugriffssteuerungs-Steuernachricht, MAC-Steuernachricht, empfangen werden.

2. Verfahren nach Anspruch 1, wobei das drahtlose Kommunikationsnetz ein Long-Term-Evolution-Netz, LTE-Netz, ist.

3. Verfahren nach einem der Ansprüche 1 oder 2, wobei der empfangende Funknetzknoten (20) eine drahtlose Kommunikationsvorrichtung ist.

4. Verfahren nach einem der Ansprüche 1 oder 2, wobei der empfangende Funknetzknoten (20) ein eNodeB ist.

5. Empfangender Funknetzknoten (20), der so konfiguriert ist, dass er Benutzerverkehr in einem drahtlosen Kommunikationsnetz mit expliziter Überlastungsbenachrichtigungsmarkierung, ECN-Markierung, markiert, wobei der empfangende Funknetzknoten (20) konfiguriert ist, um Steuerinformation von einem sendenden Funknetzknoten (10) zu empfangen; wobei die Steuerinformation eine Verkehrsüberlastung auf einem Datenfunkträger basierend auf einer Überlastungsmetrik angibt; und
wobei der empfangende Funknetzknoten (20) konfiguriert ist, um basierend auf der Steuerinformation das nächste ECN-fähige Benutzerpaket des Benutzerverkehrs auf dem Datenfunkträger mit ECN-Markierung zu markieren; wobei das Benutzerpaket ein Internetprotokollpaket, IP-Paket, ist; und
wobei die Steuerinformation in einer Funkverbindungssteuerungs-Steuerungsprotokolldateneinheit, RLC-PDU, oder einer Mediumzugriffssteuerungs-Steuernachricht, MAC-Steuernachricht, empfangen werden.

## Revendications

1. Procédé mis en œuvre par un nœud de réseau radio de réception (20) pour un marquage de notification d'encombrement explicite, ECN, de trafic d'utilisateur dans un réseau de communication sans fil, dans lequel ledit procédé comprend les étapes consistant à :
recevoir (S100) des informations de commande depuis un nœud de réseau radio d'envoi (10) ; dans lequel lesdites informations de commande indiquent un encombrement de trafic sur une porteuse radio de données, sur la base d'une métrique d'encombrement ; et
marquer (S200) le paquet utilisateur à capacité ECN suivant dudit trafic d'utilisateur sur ladite porteuse radio de données avec un marquage ECN, sur la base desdites informations de commande ; dans lequel ledit paquet utilisateur est un paquet de protocole Internet, IP ; et
dans lequel lesdites informations de commande sont reçues dans une unité de données de protocole, PDU, de commande de commande de liaison radio, RLC, ou un message de commande de commande d'accès au support, MAC.

2. Procédé selon la revendication 1, dans lequel ledit réseau de communication sans fil est un réseau Évolution à long terme, LTE.

3. Procédé selon l'une quelconque des revendications 1 ou 2, dans lequel ledit nœud de réseau radio de réception (20) est un dispositif de communication sans fil.

4. Procédé selon l'une quelconque des revendications 1 ou 2, dans lequel ledit nœud de réseau radio de réception (20) est un nœud B évolué.

5. Nœud de réseau radio de réception (20) configuré pour marquer un trafic d'utilisateur dans un réseau de communication sans fil avec un marquage de notification d'encombrement explicite, ECN, dans lequel ledit nœud de réseau radio de réception (20) est configuré pour recevoir des informations de commande depuis un nœud de réseau radio d'envoi (10) ; dans lequel lesdites informations de commande indiquent un encombrement de trafic sur une porteuse radio de données, sur la base d'une métrique d'encombrement ; et
dans lequel ledit nœud de réseau radio de réception (20) est configuré pour marquer un paquet utilisateur à capacité ECN suivant dudit trafic d'utilisateur sur ladite porteuse radio de données avec un marquage ECN, sur la base desdites informations de commande ; dans lequel ledit paquet utilisateur est un paquet de protocole Internet, IP ; et
dans lequel lesdites informations de commande sont reçues dans une unité de données de protocole, PDU, de commande de commande de liaison radio, RLC, ou dans un message de commande de commande d'accès au support, MAC.
